(19) Europäisches Patentamt

European Patent Office

Office européen des brevets

(11) Publication number: **0 422 529 A2**

## (12) EUROPEAN PATENT APPLICATION

(21) Application number: 90119185.8

(22) Date of filing: 05.10.90

(51) Int. Cl.5: **H02P 7/285**

(30) Priority: 13.10.89 IT 6788089

(43) Date of publication of application:
**17.04.91 Bulletin 91/16**

(84) Designated Contracting States:
**DE ES FR GB SE**

(71) Applicant: **WEBER S.r.l.**
**Corso Marconi, 20**
**I-10125 Torino(IT)**

(72) Inventor: **Serra, Gabriele**
**Via Orsani, 43**
**I-40068 S.Lazzaro di Savenna(IT)**
Inventor: **Matteucci, Daniele**
**Via Pasteur, 3**
**I-40100 Bologna(IT)**

(74) Representative: **Jorio, Paolo et al**
**STUDIO TORTA Società Semplice Via Viotti 9**
**I-10121 Torino(IT)**

(54) **System for controlling the electric motor of a vehicle actuating device.**

(57) A system (1) for automatically controlling a vehicle actuating device (3) via an electric motor (2), which system (1) comprises:
- an electronic control system (4) for processing input signals relative to parameters and operating conditions of parts of the vehicle, and generating a P.W.M. output signal (fixed frequency, variable duty cycle, square wave between zero and the vehicle battery voltage); and
- an interface circuit device (6) for decoding the P.W.M. output signal and accordingly generating a supply voltage for the electric motor (2).

Fig.1

# SYSTEM FOR CONTROLLING THE ELECTRIC MOTOR OF A VEHICLE ACTUATING DEVICE

The present invention relates to a system for controlling the electric motor of a vehicle actuating device.

Vehicles are known to feature a number of actuating devices, some of which are controlled by a respective electric motor in turn controlled directly by the user, while others are controlled by an electric system. As the output signal of the electric system is a P.W.M. (pulse width modulation) type, the actuating devices connected to the system must be designed for P.W.M. control. That is to say, they cannot be controlled, via an electric motor, by an electronic control system on the vehicle, such as that controlling an electronic injection system. At present, in fact, it is impossible to control vehicle electric motors using square-wave signals.

The aim of the present invention is to provide a system for controlling the electric motor of a vehicle actuating device, employing an electric signal picked up from an electronic control system, in particular, the one controlling the electronic injection system on the vehicle.

Further aims and advantages of the present invention will be disclosed in the following description.

With this aim in view, according to the present invention, there is provided a system for controlling the electric motor of a vehicle actuating device, characterised by the fact that it comprises:
- an electronic control system for processing a number of input signals relative to parameters and operating conditions of parts of said vehicle, and emitting a P.W.M. output signal (fixed frequency, variable duty cycle, square wave between zero and the vehicle battery voltage); and
- an interface circuit device for decoding said P.W.M. output signal and accordingly generating a supply voltage for said electric motor.

A preferred, non-limiting embodiment of the present invention will be described by way of example with reference to the accompanying drawings, in which:
- Fig.1 shows a block diagram of a system in accordance with the teachings of the present invention;
Fig.2 shows a graph of electrical supply to an electric motor on the Fig.1 system;
Fig.s 3 and 4 show electric block diagrams of two embodiments of a device on the Fig.1 system.

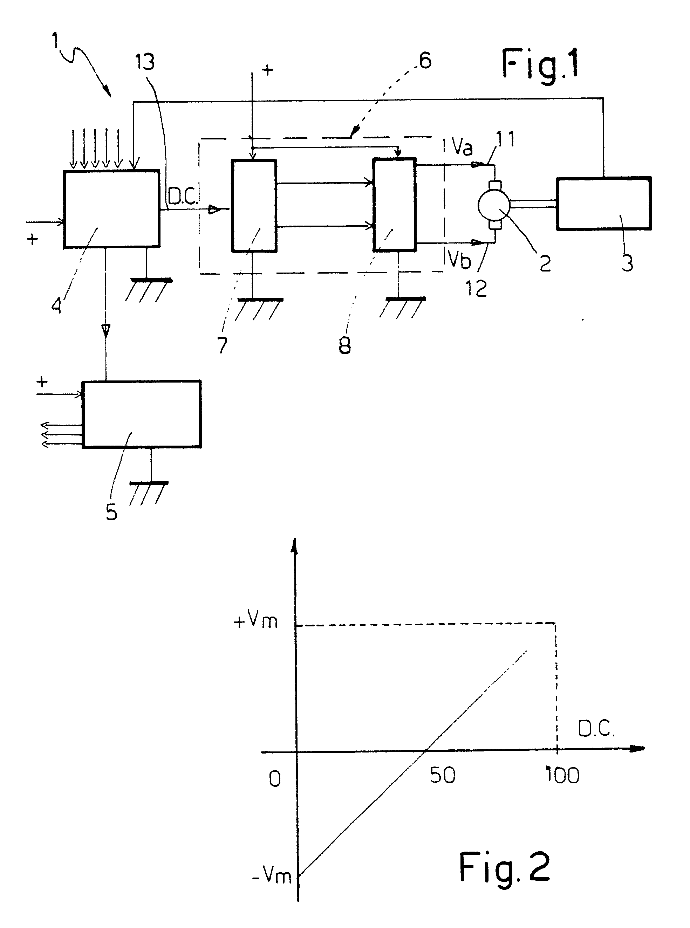

Number 1 in Fig.1 indicates a system for controlling a d.c. motor 2 in turn controlling a vehicle actuating device 3. System 1 comprises an electronic control system 4 controlling said electric motor 2 and an electronic injection device 5. Electric motor 2 is controlled via an electronic signal adapting block 6, which is substantially an interface circuit device designed to decode the output signal from control system 4, and control the speed and rotation direction of the output shaft of electric motor 2.

Control system 4 is a digital, microprocessor-based electronic control unit for controlling parameters relative to supply and ignition of the vehicle engine, i.e. the amount of fuel supplied sequentially, per delivery, to each cylinder on the engine; start of fuel supply (injection timing) as of intake by each cylinder; and ignition advance. The above parameters are calculated by system 4 on the basis of a number of input signals indicating, for example, the absolute pressure inside the intake manifold; intake air temperature; cooling fluid temperature; engine speed; the position of each cylinder in relation to top dead center; battery voltage; and the throttle setting.

Actuating device 3 is of the type controllable automatically by system 4 on the basis of the parameters controlled by the same, such as a device installed on the engine supply conduit for regulating the idling speed setting of a throttle. Certain actuating devices require a mechanical transducer for converting rotation of the output shaft of electric motor 2 into translatory motion of a member, e.g. rod, on actuating device 3. On system 1, the position of said member of device 3 constitutes a further parameter controlled by system 4, thus providing for effective feedback control for optimizing control of the member itself. Certain parameters controlled by system 4 obviously also relate to the operating conditions of device 5. Control system 4, device 5 and block 6 are naturally connected to the positive pole of the vehicle battery.

The signal at output 13 of control system 4 is a fixed-frequency, square-wave type between zero and the vehicle battery voltage. By varying the duty cycle, system 1 provides for converting said signal into a variable, reversible voltage with which to supply electric motor 2. Block 6 first converts a P.W.M. control signal (fixed frequency, variable duty cycle, square wave between zero and the battery voltage) into a power signal for controlling electric motor 2 in both output shaft rotation directions and, therefore, in both traversing directions of the member on device 3. For this purpose, block 6 comprises a decoder 7 for decoding the P.W.M. control signal and supplying block 8, consisting of a reversible, two-way d.c. motor control circuit, with a first signal relative to the supply voltage of electric motor 2, i.e. the rotation speed of the output shaft of motor 2, and a second signal relative to the sign of said voltage, i.e. the rotation direction of the output shaft. In this connection, it should be pointed out that device 3 presents two limit stops which, as explained in more detail later on, provide for ensuring the safety of system 1 under given operating conditions.

From block 8, there extend two electric cables 11 and 12 for supplying motor 2. The electric potential of cables 11 and 12 is established by system 1, the difference between said potentials constituting the supply voltage of motor 2. That is to say, given electric potentials Va and Vb for cables 11 and 12 respectively, the absolute value Va-Vb establishes the supply voltage and therefore speed of motor 2, while the + or - sign of said value establishes the rotation direction of the output shaft. The Fig.2 graph shows the relationship between the duty cycle percentage (X axis) and Va-Vb value (Y axis), the duty cycle percentage clearly being directly proportional to the supply voltage of motor 2. In particular, for a duty cycle percentage ranging from 0% to 50%, Va-Vb is negative between -Vm (battery voltage) and zero volts, so that the shaft of motor 2 turns, for example, anticlockwise; whereas, for a duty cycle percentage ranging from 50% to 100%, Va-Vb is positive between zero volts and +Vm, so that the shaft of motor 2 turns clockwise. With a duty cycle percentage of 50%, Va-Vb is of course zero, i.e. no voltage supplied to motor 2. This latter condition wherein motor 2 is deactivated is obviously the most frequent, and conveniently provides for limiting heat dispersion. Practically speaking, a one-line output 13 on system 4 provides for the following conditions:

D.C.=50% no supply to motor 2

D.C.>50% gradually accelerated anticlockwise rotation of motor 2 shaft

D.C.=100% (continuous Vm on line 13) maximum anticlockwise speed

D.C.<50% gradually accelerated clockwise rotation of motor 2 shaft

D.C.=0% (continuous zero volts on line 13) maximum clockwise speed.

The latter condition provides for safeguarding the system in the event of line 13 being disconnected, in which case, the member on device 3 moves into the idle limit stop position as already mentioned. Another way of supplying d.c. motor 2 is to supply it with a symmetrical P.W.M. signal between cables 11 and 12. In this case, block 6 must be designed to decode the output signal from system 4 and generate a symmetrical P.W.M. signal accordingly. Supplying a d.c. motor with this type of signal is a known practice, and involves, for a given frequency, a +Vm and a -Vm voltage supply cycle. If one cycle is longer than the other, following an initial stage in which motor 2 vibrates, the output shaft rotates in a corresponding direction. That is, the rotation direction of the shaft depends on the sign of the predominant cycle, and rotation speed on the extent to which one cycle is longer than the other. With this type of supply, the torque on the shaft is obviously greater than that produced by a variable voltage supply. When both cycles are the same length, as is most frequently the case, the symmetrical P.W.M. signal generator (driver) and motor 2 are deactivated, thus limiting heat dispersion on the same.

A step motor may be used in place of d.c. motor 2, in which case, in place of block 8, adapter block 6 will comprise a pulse generator. A step motor in fact is supplied in pulses, each pulse corresponding to one step of the shaft in one direction or the other depending on the sign of the pulse.

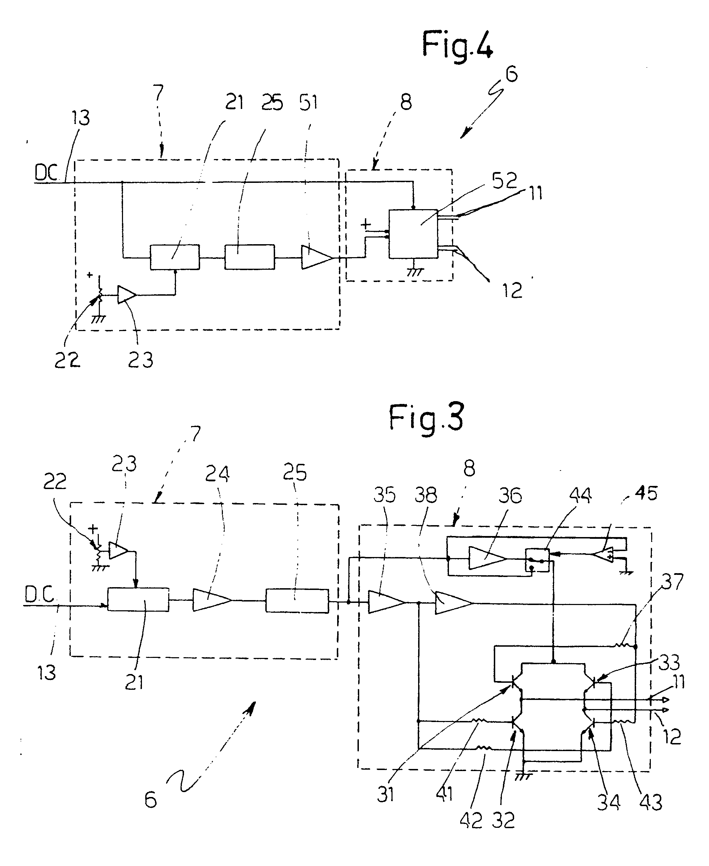

Fig.3 shows a possible electric diagram of block 6 for supplying a d.c. motor. In the arrangement shown, decoder 7 comprises an adder 21 which receives the output signal from system 4 and adds it to a negative voltage signal from a voltage divider 22 connected to the battery, and from a unit-gain inverting amplifier 23. Adder 21 is connected to a signal amplifier 24 in turn connected to a low-pass filter 25 for converting the amplified signal received from amplifier 24 into a continuous voltage signal.

Block 8 comprises a bridge of four transistors 31, 32, 33, 34; a high-gain amplifier 35 connected to filter 25; and a unit-gain inverting amplifier 36 also connected to filter 25. The base of transistor 31 is connected via a resistor 37 to the output of unit-gain inverting amplifier 38, the input of which is connected to the output of amplifier 35. The emitter of transistor 31 is connected to the collector of transistor 32, the base of which is connected via resistor 41 to the output of amplifier 35. Cable 11 is branch connected between the emitter of transistor 31 and the collector of transistor 32. Transistor 33 presents its base connected via resistor 42 to the output of amplifier 35, and its emitter connected to the collector of transistor 34, the base of which is connected via resistor 43 to the output of amplifier 38. Cable 12 is branch connected between the emitter of transistor 33 and the collector of transistor 34. The emitters of transistors 32 and 34 are connected to a reference ground, while the collectors of transistors 31 and 33 are connected to a common terminal of an electronic switch 44 having a first and second terminal connected respectively to the output and input of amplifier 36.

In actual use, adder 21 receives a square-wave signal between zero and the battery voltage (Vm), and produces a square-wave output signal ranging, for example, between -Vm/2 and +Vm/2 if a voltage of -Vm/2 is received by adder 21 from divider 22. As already stated, filter 25 converts a square-wave voltage into a continuous voltage. If this is positive, the bases of transistors 32 and 33 are also connected to + so that only transistors 32 and 33 are conductive. Switch 44 provides for permanently connecting the common and + terminals, so that cable 12 presents a positive value, cable 11 is grounded, and the output shaft of motor 2 turns, for example, clockwise. If the output voltage from filter 25 is negative, via amplifier 38, transistors 31 and 34 are conductive, cable 11 presents a positive value, cable 12 is grounded and the output shaft of motor 2 turns anticlockwise. The speed of motor 2 depends on the value of the output voltage from filter 25. Switch 44 may be controlled, as shown in Fig.3, by a comparator 45 consisting of a high-gain differential amplifier having its + input connected to a reference ground and its - input connected to the input of amplifier 36. The signal controlling switch 44 is therefore picked up at the input of amplifier 36, in that, if the voltage at said input is higher (lower) than the ground value, comparator 45 will be predominantly negative (positive), thus producing a signal for appropriately controlling switch 44, the common terminal of which is connected to the the terminal connected to the input (output) of amplifier 36.

The Fig.3 arrangement may be used for supplying motor 2 directly with a P.W.M. signal, by eliminating filter 25 of decoder 7, and amplifiers 35 and 36, switch 44 and comparator 45 of block 8; connecting the bases of transistors 32 and 33 and the input of amplifier 38 directly to the output of amplifier 24; and connecting the collectors of transistors 31 and 33 to the positive pole of the vehicle battery.

Fig.4 shows a possible electric diagram of block 6 for supplying a step motor. As in Fig.3, decoder 7 comprises an adder 21, a divider 22 and an inverting amplifier 23, but in this case adder 21 is connected directly to filter 25 in turn connected to a high-gain signal amplifier 51, the output signal of which determines the rotation direction of the step motor. Block 8 comprises a pulse generator 52 having three inputs, the first connected to the output of amplifier 51, the second to the positive pole of the vehicle battery, and the third to line 13. The P.W.M. signal at the third input determines the sync frequency of the step motor.

From generator 52, there originate two cables 11 and two cables 12 for respectively supplying a first and second coil on the motor.

The advantages of the present invention will be clear from the foregoing description.

In particular, on the basis of parameters detected by system 4, this provides, by varying the duty cycle of its output signal and via an electric motor, for controlling an actuating device while at the same time detecting the position of the mobile member of the same. In other words, system 1 provides for controlling an actuating device via an electric motor in turn controlled by an existing electronic control system on the vheicle, i.e. that controlling an electronic injection system. In addition to improving automatic control of the actuating device using an electric motor, the possibility of exploiting existing vehicle parts clearly provides for relatively low-cost manufacture and assembly of system 1.

To those skilled in the art it will be clear that changes may be made to system 1 as described and illustrated herein without, however, departing from the scope of the present invention.

In particular, system 1 may be employed for controlling any type of actuating device, such as those used for regulating valves or throttled bodies, or, generally speaking, any device connectable to an electric motor; adapter block 6 may be built into the electric motor; and, as already stated, block 6 may be designed for employing a d.c. or step motor.

## Claims

1) - A system for controlling the electric motor (2) of a vehicle actuating device (3), characterised by the fact that it comprises:
- an electronic control system (4) for processing a number of input signals relative to parameters and operating conditions of parts of said vehicle, and emitting a P.W.M. output signal (fixed frequency, variable duty cycle, square wave between zero and the vehicle battery voltage); and
- an interface circuit device (6) for decoding said P.W.M. output signal and accordingly generating a supply voltage for said electric motor (2).

2) - A system as claimed in Claim 1, characterised by the fact that said motor (2) is a d.c. motor.

3) - A system as claimed in Claim 2, characterised by the fact that said interface circuit device (6) comprises a decoding device (7) and a reversible two-way d.c. motor control circuit (8), for converting said P.W.M. output signal into a reversible, variable voltage, and controlling the rotation direction and speed of the output shaft of said motor (2).

4) - A system as claimed in Claim 3, characterised by the fact that, via said interface circuit device (6), the duty cycle percentage of said P.W.M. output signal is directly proportional to the supply voltage of said motor (2); for a duty cycle percentage of 0% to 50%, the supply voltage of said motor (2) being negative (positive) and ranging between zero volts and a negative (positive) value corresponding to the vehicle battery voltage, so that said output shaft turns anticlockwise (clockwise) at a speed proportional to said supply voltage; and for a duty cycle percentage of 50% to 100%, the supply voltage of said motor (2) being positive (negative) and ranging between zero volts and a positive (negative) value corresponding to the vehicle battery voltage, so that said output shaft turns clockwise (anticlockwise).

5) - A system as claimed in Claim 2, characterised by the fact that said interface circuit device (6) comprises a decoding device (7) and a generator for generating symmetrical, fixed-frequency P.W.M. signals between the positive and negative battery voitages; the shaft rotation direction and speed of said motor (2) depending on the predominance of one supply cycle with a voltage of a given sign over another supply cycle with a voltage of the opposite sign.

6) - A system as claimed in Claim 1, characterised by the fact that said electric motor (2) is a step motor; said interface circuit device (6) comprising a decoding device (7) and a pulse generator (52); each pulse corresponding to one step of the shaft of said motor (2) in one direction or the other depending on the sign of said pulse.

Fig.1

Fig. 2

# Fig.4

# Fig.3